(19) Europäisches Patentamt

European Patent Office

Office européen des brevets

(11) **EP 0 490 923 B1**

(12) **EUROPEAN PATENT SPECIFICATION**

(45) Date of publication and mention
of the grant of the patent:
**03.02.1999 Bulletin 1999/05**

(21) Application number: **90912877.9**

(22) Date of filing: **04.09.1990**

(51) Int Cl.$^6$: **G02B 5/18**, G02B 27/44,
B44F 1/12, B42D 15/10

(86) International application number:
**PCT/AU90/00395**

(87) International publication number:
**WO 91/03747 (21.03.1991 Gazette 1991/07)**

(54) **DIFFRACTION GRATING AND METHOD OF MANUFACTURE**

LICHTBRECHUNGSNETZ UND VERFAHREN ZUR HERSTELLUNG

RESEAU DE DIFFRACTION ET PROCEDE DE FABRICATION CORRESPONDANT

(84) Designated Contracting States:
**AT BE CH DE DK ES FR GB IT LI LU NL SE**

(30) Priority: **04.09.1989 AU 6149/89**

(43) Date of publication of application:
**24.06.1992 Bulletin 1992/26**

(73) Proprietor: **COMMONWEALTH SCIENTIFIC AND
INDUSTRIAL RESEARCH ORGANISATION
Campbell, ACT 2601 (AU)**

(72) Inventor: **LEE, Robert Arthur
Nunawading, VIC 3131 (AU)**

(74) Representative: **Charlton, Peter John
Elkington and Fife
Prospect House
8 Pembroke Road
Sevenoaks, Kent TN13 1XR (GB)**

(56) References cited:
EP-A- 228 088          EP-A- 240 261
EP-A- 240 262          EP-A- 375 833
WO-A-87/07034          WO-A-90/07133
AU-A- 1 957 683        AU-A- 4 484 064
US-A- 4 083 627

- OPTICA ACTA vol. 30, no. 4, 1983, pages 449 - 464; LEE, R A: 'Generalized Curvilinear Diffraction Gratings V. Diffraction Catastrophes'
- PATENTS ABSTRACTS OF JAPAN, P-1057, page 1; & JP,A,2 072 320 (TOPPAN PRINTING CO LTD) 12 March 1990 (12.03.90)
- Proceedings of SPIE - The International Society for Optical Engineering, Volume 526, published 1985 by SPIE, Bellingham, WA, USA, STEIN J.A. et al, 'A Display Based on Switchable Zero Order Diffraction Grating Light Valves', see Abstract, Introduction and Fig. 1,2,3.
- PATENTS ABSTRACTS OF JAPAN, P-1056, page 167; & JP,A,2 072 319 (TOPPAN PRINTING CO LTD) 12 March 1990 (12.03.90)

## Description

### Field of the Invention

This invention relates to diffraction gratings and to their manufacture and in particular provides diffraction gratings which may be adapted for application as security devices, for example, in currency notes and credit cards.

### Background Art

The 1988 plastic Australian ten-dollar note employs as an anti-counterfeiting security device, a diffraction grating image of Captain Cook which comprises a regular matrix of pixels each containing a curvilinear segment of one or more of the grating lines. These pixels when illuminated each generate a two-dimensional optical catastrophe image diffraction pattern whereby the total image diffraction pattern of the grating is optically variable but structurally stable. The Captain Cook image is an application of the present inventor's theory of generalised curvilinear diffraction gratings to optical diffraction catastrophes. The theory is outlined in Optica Acta, 1983, Vol. 30 Nos. 3 and 4, and the application to optical diffraction catastrophes is disclosed in Vol. 30, No. 4, 449 - 464. In essence, the Captain Cook image entails the imposition of a matrix of diffraction catastrophe pixels on a regular diffraction grating.

By "image diffraction pattern" in the context of this specification is meant the optical image observed by the naked eye focused on the grating when it is illuminated by an arbitrarily extended diffuse source of finite width such as a fluorescent tube. The term "diffraction grating" as employed herein indicates a grating of either reflective or transmissive lines. A pattern is described herein as "optically variable" where it varies according to the position of observation and is "structurally stable" if its broad form at any given position of observation is not materially altered by slight distortions of the grating surface.

The Captain cook pixellated diffraction grating image is substantially more secure that the traditional metal foil insert and is an improvement over security devices such as multiple film devices, conventional straight line grating and image holograms because, in contrast to these devices, it is able to sustain an acceptable level of structural stability as the notes become heavily crinkled in day-to-day use. However, for wider commercial application to credit cards and the like, it would be desirable to be able to easily convert a range of recognisable images, indeed any selected image, to pixellated diffraction gratings. This has not been disclosed to date and is an objective of a first aspect of the present invention.

EP-A-375833, an application filed before but published after the filing date of this application, also discloses a pixellated diffraction grating device in which an optically invariable image is divided into multiple pixels.

### Summary of the Invention

In its first aspect, the invention relates to the concept of producing an individual corresponding diffraction grating pixel for successive pixels of the optically invariable image, and, in a preferred arrangement, arranging for the grating pixels to reflect that observed chroma or colour value of the image pixels. In a second aspect, the invention involves the realisation that a reproduction of a diffraction grating by reflection contact printing will be flawed by moire or Talbot fringe effects, and that the pixellated diffraction grating can be designed to amplify the visual impact of these Talbot fringes to an extent that very obviously flaws a counterfeit reproduction of the grating. The moire or Talbot fringes are a function of the inevitable spacing between the photographic plate and the grating, and of variations of the local groove spacing across the grating plane.

The invention accordingly provides, in a first aspect a method of forming a diffraction grating which provides an optically variable image, said image being optically variable in that it varies according to the position of observation, comprising:

dividing an optically invariable image into multiple pixels;
determining an associated diffraction grating pixel for each of said pixels of the optically invariable image, which diffraction grating pixel is an individual optical catastrophe diffraction grating corresponding to an associated pixel of the optically invariable image; and
producing a pixellated diffraction grating which comprises an assembly of said diffraction grating pixels and which when illuminated generates an optically variable reproduction at said optically invariable image,
wherein a greyness factor is determined for each of said pixels of the optically invariable image and said diffraction grating pixels comprise respective sets of reflective or transmissive lines having a curvature which varies between pixels and which is related to the determined greyness factor of the associated pixel of the optically invariable image.

Advantageously, each grating pixel is also a function of the assessed chroma or colour value of the associated pixel in said optically invariable image so that the pixellated diffraction grating when illuminated generates a visually recognisable but optically variable reproduction of said optically invariable image. Still more advantageously, each grating pixel is such that the pixellated diffraction grating is also structurally stable reproduction of said optically invariable image.

By "optical diffraction grating" is meant a grating which when illuminated will generate a two dimensional optical image diffraction pattern.

In its first aspect, the invention extends to a diffraction grating device providing an optically variable image corresponding to an optically invariable counterpart image, comprising a pixellated diffraction grating which is an assembly of diffraction grating pixels and which when illuminated generates an optically variable image, said image being optically variable in that it varies according to the position of observation, wherein each of said diffraction grating pixels is an individual optical catastrophe diffraction grating, and wherein said diffraction grating pixels comprise respective sets of reflective or transmissive lines having a curvature which varies between pixels and which is related to a predetermined greyness factor of an associated pixel of the optically invariable counterpart image of said optically variable image.

In the simplest case of a black and white image, the chroma or colour value may be a greyness factor on a scale, e.g. of 1 to 7 or 1 to 16.

There is advantageously provided a diffraction grating formed by a regular matrix of pixels which when illuminated each generate a two-dimensional optical image diffraction pattern, wherein the grating in some or all of the pixels is arranged such that a reproduction of said grating by reflection contact printing generates a zero order pattern which is grossly flawed by moire or Talbot fringe effects, preferably to the extent that the zero order pattern of the reproduction is a cross between a negative and a positive of the zero order pattern of the original grating.

Expressed in mathematical terms, the reflective/transmissive lines of the each pixel grating according to the first aspect of the invention are advantageously such that they are defined, in terms of co-ordinates x, y in the plane of the grating, by the equation $S(x,y) = kN$ where k is a scaling factor, N is an integer and the function $S(x,y)$ is given by:

$$S_{ij}(x,y) = W_{ij}(x,y) + \beta_{ij}C_{ij}(x,y) \tag{1}$$

where

$S_{ij}(x,y)$ is the initial phase function generated by the grating pixel ij when illuminated normally by a collimated monochromatic light wave,
$W_{ij}(x,y)$ is a carrier wave of non-zero order,
$C_{ij}(x,y)$ is a function of x, y which varies rapidly with respect to x and y and whose Hessian is not identically zero, i.e. does not vanish identically;
$\beta_{ij}$ is a factor proportional to the assessed chroma or colour intensity of the pixel ij; and
i,j are the co-ordinates of the respective pixels.

The Hessian of $C_{ij}(x,y)$ is a standard complex derivative expressed as follows:

$$\partial^2 C_{ij}(x,y)/\partial x^2 . \partial^2 C_{ij}(x,y)/\partial y^2 - [\partial^2 C_{ij}(x,y)/\partial x \partial y]^2$$

In one embodiment, each grating pixel may be an individual optical catastrophe diffraction grating of the associated pixel in said optically invariable image. This occurs for (1) above when the Hessian is not identically zero except along certain characteristic lines corresponding to the caustics in the Fresnel or Fraunhofer diffraction pattern of the grating.

A particularly effective set of functions suitable to be $C_{ij}(x,y)$ are those comprising products or sums of sinusoidal terms, or a combination thereof. In general, favoured functions are those which are easily scalable to chroma or colour value, are smooth, and are easily programmed.

For the purposes of the second aspect of the invention, the right side of equation (1) may include a further summed term $Sd(x,y)$, being a shield function of periodicity substantially greater than the pixel dimensions. This shield function may be a further sum and/or product of sinusoidal terms of greater periodicity than $C_{ij}(x,y)$. Alternatively, the second aspect of the invention may be practised by the inclusion of different periodicity terms in the sinusoidal components of $C_{ij}(x,y)$. In general the moire or Talbot fringe effects in a reproduction will be amplified by selecting function terms which will generate highly curved wave fronts.

In either aspect of the invention, the pixels are preferably less than 1mm$^2$ in area most preferably squares. The reflective/transmissive lines are advantageously reflective grooves, e.g. square cut grooves, in a metallised surface.

The invention extends of course to the combination of the two aspects of the invention in the one grating image.

## Brief Description of the Drawings

The invention will be further described, by way of example only, with reference to the accompanying drawings, in which:

Figures 1 and 2 are respective photoprints of an original optically invariable structurally stable black and white image, and of the diffraction image of a corresponding pixellated diffraction grating produced in accordance with both aspects of the invention, in which each pixel is an individual optical diffraction grating;
Figure 3 is a reproduction of the pixellated diffraction grating by reflection contact printing;
Figure 4 is a greatly magnified representative pixel from Figure 2;
Figure 5A is a further enlargement of the top left hand corner of the pixel of Figure 4;
Figure 5B is an extreme close up of a section of a typical pixel; and
Figure 6 is an enlargement of a central region (10 x 10 cells) of Figure 4.

## Best Modes of Carrying Out the Invention

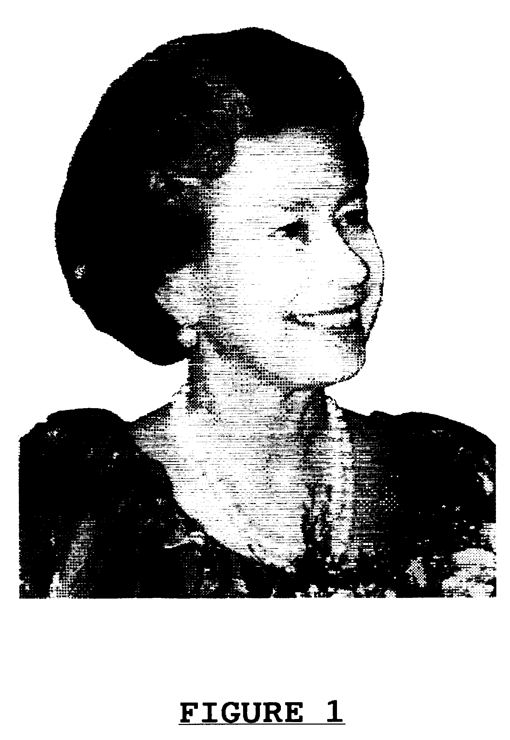

An exemplary embodiment of the first aspect of the invention will now be described. For the purposes of explanation, reference is made to the optically invariable structurally stable black and white image of Figure 1. To produce the corresponding pixellated diffraction grating the image of Figure 1 is first divided up into 0.125 mm square pixels and the chroma or colour value, in this case the grey level, of each pixel is assessed in turn. This process is typically carried out by exposing the image to a video camera coupled to a suitable computer system, the grey level for each pixel being stored in the computer memory. Using a predetermined function Sij(x,y), a pixellated grating is produced, for example by election beam lithography as discussed further below. In this grating, each pixel is an individual optical diffraction grating of the associated pixel in the original image and also a function of the assessed grey level of that associated pixel of the original image. It will be understood that each pixel of the original image is mapped to a respective pixel of the pixellated grating.

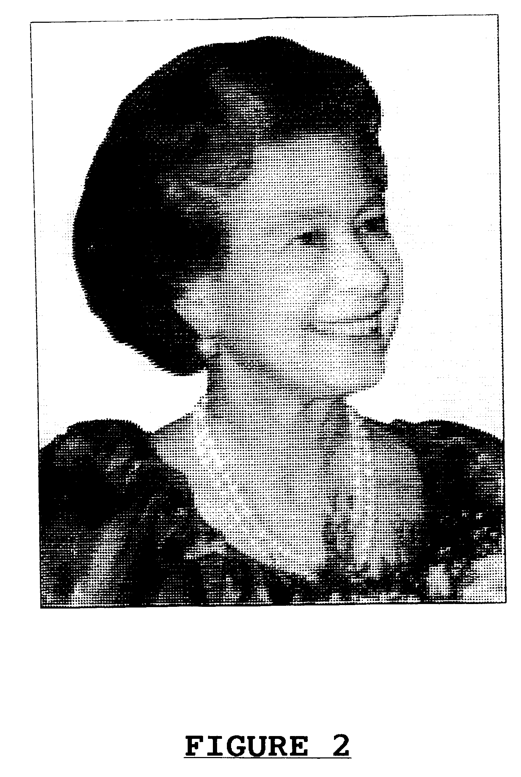

Figure 2 is the diffraction image at a given viewing angle generated when the pixellated grating is illuminated. This image consists of 166 x 208 pixels, each 0.125 mm square. The actual grating size is 20.75mm x 26mm and there 14 grey levels in the assessment scale. The pattern is a visually recognisable but optically variable reproduction of the original optically invariable image of Figure 1.

A suitable pixel grating function is given by:

$$y_{ij} = \left(\alpha_{ij} - 2\pi\beta_{ij}\right)z - \left(\frac{\beta_{ij}}{\alpha_{ij} - 2\pi\beta_{ij}}\right)\cos(2\pi x)\cos\left[2\pi\left(\alpha_{ij} - 2\pi\beta_{ij}\right)z\right] \qquad .....2$$

where

$z = m/n$ is the cell groove index parameter and is equivalent to the pixel phase function $S(x,y)$ described earlier, n is the total number of grooves in the pixel (=100 in this case) and m=1 to n.
$\alpha_{ij}$ is a preset variable which reflects colour and determines the line density;
$\beta_{ij}$ is a parameter proportional to assessed grey level;
$0.8 \le \alpha_{ij} \le 1.2$;
$0.004 \le B_{ij} \le 0.064$;
$0.25 \le x \le 0.5$;
$0.75 \le y \le 1.0$
i,j are the co-ordinates of the respective pixels.

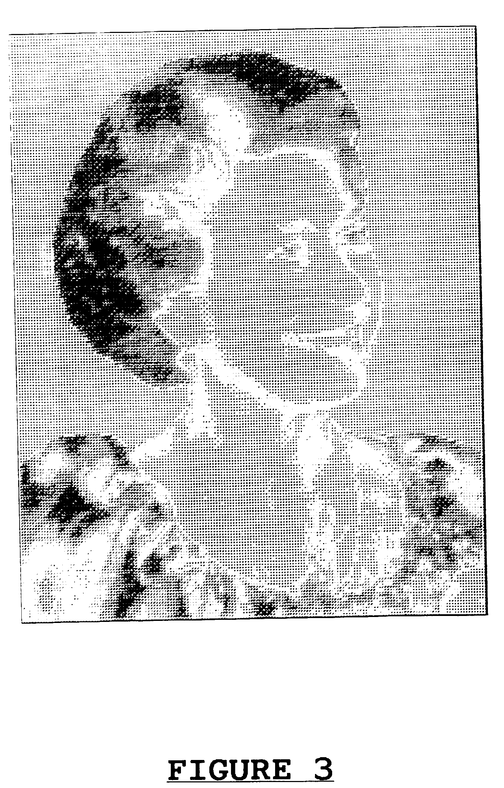

This form of grating function embodies both aspects of the invention. The product of two sinusoidal terms of different periodicity is effective to generate gross flaw moire or Talbot fringe in a reflection contact printing reproduction of the grating image. Such a reproduction pixellated grating for Figure 1 generates the zero-order image diffraction pattern shown in Figure 3: it is visually substantially a cross between a negative and a positive of the image diffraction pattern of the original grating and is very obviously flawed to any observer. In producing this reproduction, the copy plate separation was 10 microns and the exposure was equivalent to 5 Talbot fringes.

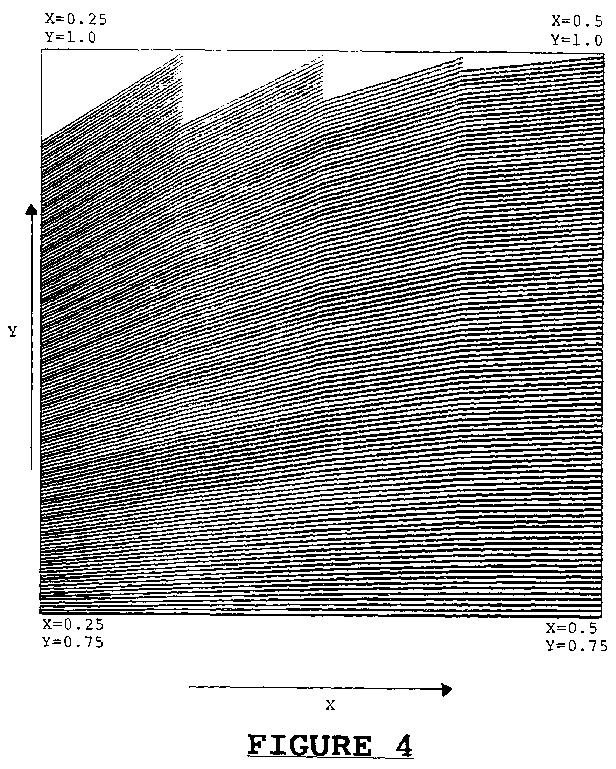

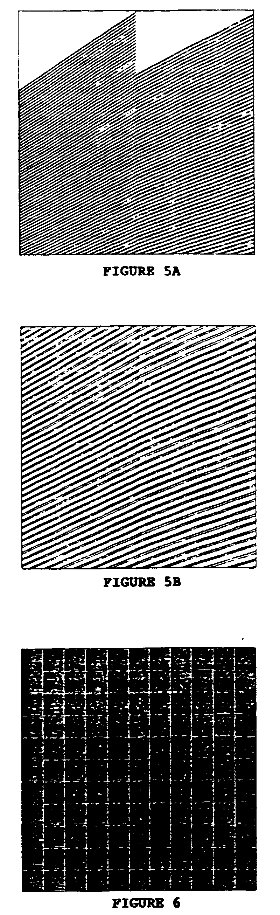

A magnified view of an exemplary pixel grating is shown in Figure 4. This is actually a computer plot of one of the pixel gratings produced from Figure 1 and the optical effect arising from slight discontinuities in the lines is a printer artefact. The lines are shallow parabolas. The effect of decreasing grey level parameter $\beta$ is to spread the lines apart, more at the centre than at the edges, thereby increasing the curvature of each parabola. This of course has the effect of lightening the grey level of the pixel in the grating image diffraction pattern so that the overall effect is that the grating image diffraction pattern is a pixellated visually recognisable reproduction of the original image. The pixel of Figure 4 is for the lightest of the 14 shades of grey i.e. $\beta_{ij} = 0.064$ and $\alpha_{ij} = 1.0$ in equation (2) above. It will be seen in Figure 4 that each curved grating line or groove is approximated by 4 straight line segments at different angles and connected end to end. Each straight line segment is in reality a miniature polygon in the shape of a rhombus with a well defined width as shown in the enlargement of Figure 5A. Figure 5B is an extreme close-up of a section of a typical pixel showing the butting together of polygon groove segments and variations in groove width. Figure 6 depicts a small group of 10 x 10 pixels from the central region of the grating of Figure 2, showing differences in groove curvature from pixel to pixel for clarity only a few grooves have been plotted in each pixel.

In general it will be appreciated that $S_{ij}(x,y)$ may be adjusted to select the brightness and stability of each pixel, choose the colour and orientation of each pixel, fix the distance and angle at which the diffracted image has maximum clarity and finally to choose the light sources that give maximum effect to the diffracted portrait image.

It should be noted that, because the pixels diffract the light over a much greater range of solid angles than a conventional grating, the observed energy density reaching the retina of the eye at a particular angle of view is much less than in the case of the conventional grating. This means that the requirements on diffraction efficiencies are more significant for a grating according to the invention than for any other type of grating. In particular, if the grating lines are grooves, the groove depths should be optimised for maximum diffraction efficiency. For a square wave groove profile this generally means that the groove depth should be about 40 per cent of the average groove spacing. In the case of the grating of Figure 4, the groove depth should be about 0.5 to 0.6 micron, most preferably about 0.56 micron.

An actual grating of the form of Figure 2 has been constructed by programming an electron beam lithography system. The grating was written on PMMA electron resist spin coated onto a chrome coated glass substrate, which may be then processed to produce a gold coated nickel master from which plastic film replica gratings are pressed.

The practical process effectively entails converting any given photograph of a portrait or scene into a set of data files that are used to control the exposure and writing characteristics of the electron beam lithography system in such a way as to enable the machine to produce corresponding master gratings according to the invention.

First the portrait is scanned into a computer graphics system via a high quality colour scanner such as a Sharp JX-300 and then processed by a special purpose interactive software package built around the inventor's aforementioned theory of generalised diffraction gratings. This software package provides the grating designer with a set of options for converting the portrait data into a diffraction line pattern and corresponding data file for electron beam fabrication of the grating by the electron beam lithography system.

The first part of the program "screens" the digitised portrait into the selected array of N X M pixels. The resolution of the screen or pixel size is the choice of the designer and obviously the smaller the pixels, the larger the resultant data file. The second part of the program converts each pixel of the screened portrait into its corresponding diffraction grating as discussed above.

The final part of the design program consists of a set of subroutines for displaying the observed diffraction patterns of the grating under a range of light sources and observing conditions. If an initial design is not satisfactory in some respect, the designer can then go back and modify the design before producing the final data file for electron beam fabrication of the grating.

A durable metal master of the optimised grating may be obtained by vacuum coating the photoresist master with 200 Angstroms of 99.99% gold and electro-depositing a thick layer of nickel to act as a support.

After separating from the glass master this gold coated nickel master may be bonded to a brass block and used as a die for hot pressing of plastic film replica gratings. In order for the plastic replicas to retain the optimised diffraction efficiencies of the master die the temperature and pressure combinations associated with the hot embossing process should be such that the replicated groove depths are as close as possible to the original 0.56 micron groove depth of the metal die.

After metallising with aluminium and plastic coated for protection, the plastic replicas may be adhesively attached to currency notes or credit cards.

The representation of the picture information by a matrix of optically variable pixels endows this type of diffraction grating with several unique properties which the image holograms, now employed as anti-counterfeiting labels on credit cards, do not possess because of the restrictions on line shape inherent in the hologram fabrication process.

According to the present invention, it is possible to produce diffraction gratings which generate realistic text and portrait images of near photographic quality. The images may be both sharply defined and optically variable under most lighting conditions including very diffuse sources. This is in contrast to the case of the holograms which produce very fuzzy images and lose their optical variability under overcast lighting conditions. The kinegram optically variable device used on the Austrian 5,000 schilling banknote retains a high degree of optically variability under diffuse lighting conditions, but only produces schematic types of images.

The optical variability of the invention is also easily defined; the image simply changes from positive to negative as the angle of observation changes. The images generated by the invention also exhibit a high degree of structural stability with respect to bending undulations of the grating surface. They are therefore suitable security devices for currency notes and share certificates etc. When a grating according to the preferred embodiment is observed directly under an extended source such as a fluorescent tube the intensities of the pixels varying smoothly with changing angle of view. The pixels may be said to possess a degree of structural stability because any perturbation of the initial wavefront due to crinkling of the grating surface in the vicinity of the pixel will only cause a change of intensity in the pixel. This is in contrast to conventional generalised gratings or image holograms where the local line pattern in areas equivalent to the size of a pixel is rectilinear and therefore any local crinkling perturbation will cause the observed image point to "switch off" completely. Conventional generalised gratings or image holograms are therefore highly structurally unstable since for a given wavelength small areas of the grating diffract narrow pencil-like beams which are much more sensitive to perturbations than the expanding beams produced by the pixels of a grating.

Preferred gratings of the type described here are designed, in accordance with the second aspect of the invention, to be resistant to copying by the well known method of reflection contact printing. The zero order portrait image of the copy grating becomes covered in amass of dark spoiler bands thereby making the zero order portrait image unrecognisable. In contract, holograms and kinegrams are easily counterfeited by this method.

An additional related feature of the invention is the ability to selectively vary the groove depth of the pixels by varying the electron beam current during the grating fabrication process in such away as to cause a visible text or graphic image to appear in the zero diffraction order. This additional static image does not appear with any clarity on a reflection contact print counterfeit of the grating and is therefore an added security feature.

Finally, these diffraction gratings are binary phase devices and are therefore easily mass produced by the same embossing method used for holograms.

An alternative approach to the second aspect of the invention is to use a $C_{ij}(x,y)$ with sinusoidal terms of similar periodicity and to impose a summed shield function $Sd(x,y)$ of longer periodicity extending over several pixels. For example, a suitable function would be

$$Sd(x,y) = \alpha y + \beta \, [Cos \, 2\pi Qx \, Cos \, 2\pi Qy - 2/3(Cos \, 2\pi Qx + Cos \, 2\pi Qy)]$$

where $\alpha$ and $\beta$ are parameters as above and Q is a further periodicity parameter.

## Claims

1.  A method of forming a diffraction grating which provides an optically variable image, said image being optically variable in that it varies according to the position of observation, comprising:

    dividing an optically invariable image into multiple pixels;
    determining an associated diffraction grating pixel for each of said pixels of the optically invariable image, which diffraction grating pixel is an individual optical catastrophe diffraction grating corresponding to an associated pixel of the optically invariable image; and
    producing a pixellated diffraction grating which comprises an assembly of said diffraction grating pixels and which when illuminated generates an optically variable reproduction at said optically invariable image,
    wherein a greyness factor is determined for each of said pixels of the optically invariable image and said diffraction grating pixels comprise respective sets of reflective or transmissive lines having a curvature which varies between pixels and which is related to the determined greyness factor of the associated pixel of the optically invariable image.

2.  A method according to claim 1 further characterised in that each grating pixel is such that the pixellated diffraction grating is also a structurally stable reproduction of said optically invariable image in that its broad form at any given position of observation is not materially altered by slight distortions of the grating surface.

3.  A method according to claim 1 or 2, wherein the curvature of said set of reflective or transmissive lines of a diffraction grating pixel is inversely proportional to the greyness factor.

4. A method according to any preceding claim, further characterised in that each individual optical diffraction grating comprises reflective or transmissive lines defined, in terms of co-ordinates x, y in the plane of the grating, by the equation S(x,y) = kN where k is a scaling factor, N is an integer and the function S(x,y) is given by:

$$S_{ij}(x,y) = W_{ij}(x,y) + B_{ij}C_{ij}(x,y) \qquad (1)$$

where

$S_{ij}(x,y)$ is the initial phase function generated by the grating pixel ij when illuminated normally by a collimated monochromatic light wave,
$W_{ij}(x,y)$ is a carrier wave of non-zero order,
$C_{ij}(x,y)$ is a function of x, y which varies rapidly with respect to x and y and whose Hessian is not identically zero, i.e. does not vanish identically;
$\beta_{ij}$ is a factor proportional to the assessed chroma or colour value; and
i,j are the co-ordinates of the respective pixels.

5. A method according to claim 4, further characterised in that the function $C_{ij}(x,y)$ is selected from the set of functions comprising products or sums of sinusoidal terms, or a combination thereof.

6. A method according to any preceding claim, further characterised in that the grating function for some or all of the pixels is selected such that a reproduction of said pixellated diffraction grating by reflection contact printing generates a zero order pattern which is grossly flawed by moire or Talbot fringe effects.

7. A method according to claim 6, further characterised in that said grating function includes sinusoidal terms of different periodicity so that the zero order pattern of the reproduction is a hybrid between a negative and a positive of the zero order pattern of the original grating from which the reproduction is made.

8. A method according to claim 6 or 7 when dependent on claim 5, further characterised in that the sinusoidal components of $C_{ij}(x,y)$ include terms of different periodicity whereby to generate highly curved wave fronts.

9. A method according to claim 6 or 7 when dependent on claim 5, further characterised in that the right side of equation (1) includes a further summed shield function term of periodicity substantially greater than the pixel dimensions.

10. A method according to claim 9, further characterised in that said further summed term is a sum and/or product of sinusoidal terms of greater periodicity than $C_{ij}(x,y)$.

11. A method according to any preceding claim, further characterised in that the grating pixels are squares less than $1mm^2$ in area.

12. A method according to any preceding claim, further characterised in that the pixellated diffraction grating is produced by forming reflective grooves, e.g. square cut grooves, in a metallised surface.

13. A method according to any preceding claim, further characterised in that said pixellated diffraction grating is a durable master grating formed by electron beam lithography, from which multiple replica gratings may be produced.

14. A method according to claim 9, further characterised in that said shield function term is composed of a sum and/or product of sinusoidal functions in order to cause the diffraction grating to diffract highly curved wave fronts that amplify the said Talbot fringe effects generated on reflection contact printing of the grating.

15. A method according to any preceding claim, further characterised in that an optically variable image observable on illumination of the grating varies from a positive tone image to the corresponding reverse negative tone image as the angle of observation changes.

16. A method according to any preceding claim, further characterised in that said reflective or transmissive lines are formed as grooves, and further characterised by selectively varying the groove depth of the grating pixels in such a way as to cause visible text or graphic image to appear in the zero diffraction order.

17. A method according to claim 16 when dependent on claim 13, further characterised in that said groove depth is varied by varying the electron beam current in said electron beam lithography.

18. A method according to any preceding claim, further characterised in that said greyness factors of the pixels of the optical invariable image are selected from a scale containing a predetermined finite number of values of greyness factor.

19. A method according to any preceding claim, further characterised by producing said pixellated diffraction grating as a replica grating by hot pressing with a die comprising a master grating.

20. A method according to claim 13 or 19, further characterised in that the master grating is a gold plated nickel master.

21. A method according to any preceding claim, further characterised by forming said reflective or transmissive lines as polygon-shaped groove elements of varying depth, width and spacing.

22. A method according to claim 21, further characterised by adjusting said functions to select pixel brightness, stability and colour.

23. A diffraction grating device providing an optically variable image corresponding to an optically invariable counterpart image, comprising a pixellated diffraction grating which is an assembly of diffraction grating pixels and which when illuminated generates an optically variable image, said image being optically variable in that it varies according to the position of observation, wherein each of said diffraction grating pixels is an individual optical catastrophe diffraction grating, and wherein said diffraction grating pixels comprise respective sets of reflective or transmissive lines having a curvature which varies between pixels and which is related to a predetermined greyness factor of an associated pixel of the optically invariable counterpart image of said optically variable image.

24. A diffraction grating according to claim 23, further characterised in that each grating pixel is also a function of chroma or colour value.

25. A diffraction grating according to claim 23 or 24, further characterised in that each grating pixel is such that the pixellated diffraction grating is also a structurally stable image in that its broad form at any given position of observation is not materially altered by slight distortions of the grating surface.

26. A diffraction grating according to any one of claims 23 to 25, further characterised in that said lines have a line density which varies between pixels and which is related to a predetermined chroma or colour value of the associated pixel of the optically invariable image.

27. A diffraction grating according to any of claims 23 to 26, wherein the curvature of said set of reflective or transmissive lines of a diffraction grating pixel is inversely proportional to the greyness factor.

28. A diffraction grating according to any one of claims 23 to 27, further characterised in that each individual optical diffraction grating comprises reflective or transmissive lines defined, in terms of co-ordinates x, y in the plane of the grating, by the equation $S(x,y) = kN$ wherein k is a scaling factor, N is an integer and the function $S(x,y)$ is given by:

$$S_{ij}(x,y) = W_{ij}(x,y) + \beta_{ij}C_{ij}(x,y) \tag{1}$$

where

$S_{ij}(x,y)$ is the initial phase function generated by the grating pixel ij when illuminated normally by a collimated monochromatic light wave,
$W_{ij}(x,y)$ is a carrier wave of non-zero order,
$C_{ij}(x,y)$ is a function of x, y which varies rapidly with respect to x and y and whose Hessian is not identically zero i.e. does not vanish identically;

$\beta_{ij}$ is a factor proportional to the assessed chroma or colour value; and i,j are the co-ordinates of the respective pixels.

29. A diffraction grating according to claim 28, further characterised in that the function $C_{ij}(x,y)$ is selected from the set of functions comprising products or sums of sinusoidal terms, or a combination thereof.

30. A diffraction grating according to any one of claims 23 to 29, further characterised in that the grating function for some or all of the pixels is arranged such that a reproduction of said pixellated diffraction grating by reflection contact printing generates a zero order pattern which is grossly flawed by moire or Talbot fringe effects.

31. A diffraction grating according to claim 30, further characterised in that said grating function includes sinusoidal terms of different periodicity so that the zero order pattern of the reproduction is a hybrid between a negative and a positive of the zero order pattern of the original grating from which the reproduction was made.

32. A diffraction grating according to claim 30 or 31 when dependent on claim 29, further characterised in that the sinusoidal components of $C_{ij}(x,y)$ include terms of different periodicity whereby to generate highly curved wave fronts.

33. A diffraction grating according to claim 31 or 32 when dependent on claim 28, further characterised in that the right side of equation (1) includes a further summed shield function term of periodicity substantially greater than the pixel dimensions.

34. A diffraction grating according to any one of claims 23 to 33, further characterised in that the grating pixels are squares less than $1\text{mm}^2$ in area.

35. A diffraction grating according to any one of claims 23 to 34, further characterised in that said pixellated grating comprises reflective or transmissive lines of a depth which varies so as to cause a static visible text or graphic image to appear in the zero diffraction order.

36. A diffraction grating according to any one of claims 23 to 35, comprising a durable master grating formed by electron beam lithography, from which multiple replica gratings may be produced.

37. A diffraction grating according to claim 33, further characterised in that said shield function term is composed of a sum and/or product of sinusoidal functions in order to cause the diffraction grating to diffract highly curved wave fronts that amplify the said Talbot fringe effects generated on reflection contact printing of the grating.

38. A diffraction grating according to any one of claims 23 to 37, further characterised in that an optically variable image observable on illumination of the grating varies from a positive tone image to the corresponding reverse negative tone image as the angle of observation changes.

39. A diffraction grating according to any one of claims 23 to 38, further characterised in that said reflective or transmissive lines are formed as grooves, and said groove depth of the grating pixels varies in such a way as to cause visible text or grahic image to appear in the zero diffraction order.

40. A diffraction grating according to any one of claims 23 to 39, provided on a currency note, credit card, share certificate, or other security document to protect the document against counterfeiting.

41. A diffraction grating according to any one of claims 23 to 40, further characterised in that said greyness factors of the pixels of the optical invariable image are selected from a scale containing a predetermined finite number of values of greyness factor.

42. A diffraction grating according to any one of claims 23 to 41, further characterised in that said reflective or transmission lines are polygon-shaped groove elements of varying depth, width and spacing.

**Patentansprüche**

1. Verfahren zur Herstellung eines Lichtbrechungsnetzes bzw. Beugungsgitters, welches ein optisch veränderbares Bild zur Verfügung stellt, wobei das Bild optisch veränderbar dahingehend ist, daß es entsprechend der Betrachtungsposition variiert, umfassend:

Unterteilen eines optisch unveränderbaren Bildes in eine Vielzahl von Pixel bzw. Bildelemente;
Bestimmen eines zugeordneten Beugungsgitterpixels für jedes der Pixel des optisch unveränderbaren Bildes, wobei das Beugungsgitterpixel ein einzelnes optisches Katastrophenbeugungsgitter entsprechend einem zugehörigen Pixel des optisch unveränderbaren Bildes ist; und
Erzeugen-eines in Pixel zerteilten bzw. aus Pixeln zusammengesetzten Beugungsgitters, welches eine Anordnung der Beugungsgitterpixel umfaßt und welches bei einer Beleuchtung eine optisch veränderbare Reproduktion des optisch unveränderbaren Bildes erzeugt,
wobei ein Graufaktor für jedes der Pixel des optisch unveränderbaren Bildes bestimmt wird und die Beugungsgitterpixel entsprechende Sätze von reflektierenden oder durchlässigen Linien umfassen, welche eine Krümmung aufweisen, welche zwischen Pixeln variiert und welche zu dem bestimmten Graufaktor des zugeordneten Pixels des optisch unveränderbaren Bildes in bezug steht.

2. Verfahren nach Anspruch 1, weiters gekennzeichnet dadurch, daß jedes Gitterpixel derart ist, daß das in Pixel zerlegte Beugungsgitter auch eine strukturell stabile Reproduktion des optisch unveränderbaren Bildes dahingehend ist, daß seine breite Form bei jeder vorgegebenen Betrachtungsposition nicht materiell durch geringe Verzerrungen bzw. Verformungen der Gitteroberfläche geändert wird.

3. Verfahren nach Anspruch 1 oder 2, worin die Krümmung des Satzes von reflektierenden oder durchlässigen Linien eines Beugungsgitterpixels umgekehrt proportional zu dem Graufaktor ist.

4. Verfahren nach einem der vorangehenden Ansprüche, weiters gekennzeichnet dadurch, daß jedes einzelne optische Beugungsgitter reflektierende oder durchlässige Linien umfaßt, welche in Termen von Koordinaten x, y in der Ebene des Gitters durch die Gleichung S(x,y) = kN definiert werden, worin k ein Skalierungsfaktor ist, N eine ganze Zahl ist und die Funktion S(x,y) gegeben ist durch:

$$S_{ij}(x,y) = W_{ij}(x,y) + \beta_{ij}C_{ij}(x,y) \tag{1}$$

worin

$S_{ij}(x,y)$ die Anfangsphasenfunktion ist, welche durch das Gitterpixel ij erzeugt wird, wenn es normal durch eine kollimierte, monochromatische Lichtwelle beleuchtet wird,
$W_{ij}(x,y)$ eine Trägerwelle einer Ordnung ungleich null ist,
$C_{ij}(x,y)$ eine Funktion von x, y ist, welche sich rasch in bezug auf x und y ändert und deren Hess'sche Funktion nicht ident null ist, d.h. nicht ident verschwindet;
$\beta_{ij}$ ein Faktor proportional zu dem festgestellten Farbton oder Farbwert ist; und
i, j die Koordinaten der entsprechenden Pixel sind.

5. Verfahren nach Anspruch 4, weiters gekennzeichnet dadurch, daß die Funktion $C_{ij}(x,y)$ gewählt ist aus dem Satz von Funktionen, umfassend Produkte oder Summen von Sinustermen oder einer Kombination davon.

6. Verfahren nach einem der vorangehenden Ansprüche, weiters gekennzeichnet dadurch, daß die Gitterfunktion für einige oder alle der Pixel derart gewählt wird, daß eine Reproduktion des in Pixel zerteilten Beugungsgitters durch Reflexionskontaktdrucken ein Muster nullter Ordnung erzeugt, welches beträchtlich durch Moiré- oder Talbot-Randeffekte beeinträchtigt wird.

7. Verfahren nach Anspruch 6, weiters gekennzeichnet dadurch, daß die Gitterfunktion Sinusterme unterschiedlicher Periodizität beinhaltet, sodaß das Muster nullter Ordnung der Reproduktion ein Hybrid zwischen einem Negativ und einem Positiv des Musters nullter Ordnung des ursprünglichen Gitters ist, aus welchem die Reproduktion hergestellt wird.

8. Verfahren nach Anspruch 6 oder 7, wenn abhängig von Anspruch 5, weiters gekennzeichnet dadurch, daß die Sinuskomponenten von $C_{ij}(x,y)$ Terme unterschiedlicher Periodizität beinhalten, um dadurch stark gekrümmte Wellenfronten zu erzeugen.

9. Verfahren nach Anspruch 6 oder 7, wenn abhängig von Anspruch 5, weiters gekennzeichnet dadurch, daß die rechte Seite der Gleichung (1) einen weiteren summierten Schildfunktionsterm einer Periodizität aufweist, welche bedeutend größer als die Pixelabmessungen ist.

10. Verfahren nach Anspruch 9, weiters gekennzeichnet dadurch, daß der weitere summierte Term eine Summe und/oder ein Produkt von Sinustermen einer größeren Periodizität als $C_{ij}(x,y)$ ist.

11. Verfahren nach einem der vorangehenden Ansprüche, weiters gekennzeichnet dadurch, daß die Gitterpixel Quadrate mit weniger als 1 mm$^2$ Fläche sind.

12. Verfahren nach einem der vorangehenden Ansprüche, weiters gekennzeichnet dadurch, daß das in Pixel zerlegte Beugungsgitter durch Ausbilden von reflektierenden Nuten bzw. Rillen, beispielsweise quadratisch geschnittene Nuten, in einer metallisierten Oberfläche hergestellt wird.

13. Verfahren nach einem der vorangehenden Ansprüche, weiters gekennzeichnet dadurch, daß das in Pixel zerlegte Beugungsgitter ein dauerhaftes Mastergitter ist, welches durch Elektronenstrahllithografie erzeugt wird, aus welchem eine Vielzahl von Replikagittern hergestellt werden kann.

14. Verfahren nach Anspruch 9, weiters dadurch gekennzeichnet, daß der Schildfunktionsterm von einer Summe und/oder einem Produkt von Sinusfunktionen zusammengesetzt wird, um zu bewirken, daß das Beugungsgitter stark gekrümmte Wellenfronten beugt, welche die Talbot-Randeffekte verstärken, welche beim Reflexionskontaktdrucken des Gitters erzeugt werden.

15. Verfahren nach einem der vorangehenden Ansprüche, weiters gekennzeichnet dadurch, daß ein optisch veränderbares Bild, welches bei Beleuchtung des Gitters betrachtbar ist, von einem Bild positiver Tönung zu dem entsprechenden umgekehrten Bild negativer Tönung variiert, wenn sich der Betrachtungswinkel ändert.

16. Verfahren nach einem der vorangehenden Ansprüche, weiters gekennzeichnet dadurch, daß die reflektierenden oder durchlässigen Linien als Nuten bzw. Rillen geformt werden, und weiters gekennzeichnet durch ein selektives Variieren der Nutentiefe der Gitterpixel derart, um zu bewirken, daß sichtbarer Text oder ein grafisches Bild in der nullten Beugungsordnung auftreten.

17. Verfahren nach Anspruch 16, wenn abhängig von Anspruch 13, weiters gekennzeichnet dadurch, daß die Nutentiefe durch Variieren des Elektronenstrahlstromes in der Elektronenstrahllithografie geändert wird.

18. Verfahren nach einem der vorangehenden Ansprüche, weiters gekennzeichnet dadurch, daß die Graufaktoren der Pixel des optisch unveränderbaren Bildes aus einer Skala, enthaltend eine vorgegebene, endliche Anzahl von Werten des Graufaktors, gewählt werden.

19. Verfahren nach einem der vorangehenden Ansprüche, weiters gekennzeichnet durch ein Erzeugen eines in Pixel zerlegten Beugungsgitters als ein Replikagitter durch Heißpressen mit einer Form umfassend ein Mastergitter.

20. Verfahren nach Anspruch 13 oder 19, weiters gekennzeichnet dadurch, daß das Mastergitter ein goldplattiertes Nickel-Master ist.

21. Verfahren nach einem der vorangehenden Ansprüche, weiters gekennzeichnet durch ein Ausbilden der reflektierenden oder durchlässigen Linien als polygonförmige Nutenelemente mit unterschiedlicher Tiefe, Breite oder Abstand.

22. Verfahren nach Anspruch 21, weiters gekennzeichnet durch ein Einstellen der Funktionen zur Auswahl der Pixelhelligkeit, Stabilität und Farbe.

23. Lichtbrechungsnetz- bzw. Beugungsgittervorrichtung, welche(s) ein optisch veränderbares Bild entsprechend einem optisch unveränderbaren Gegenbild zur Verfügung stellt, umfassend ein in Pixel zerlegtes bzw. aus Pixeln zusammengesetztes Beugungsgitter, welches eine Anordnung von Beugungsgitterpixeln ist und welches bei einer Beleuchtung ein optisch veränderbares Bild erzeugt, wobei das Bild optisch veränderbar dahingehend ist, daß es sich entsprechend der Betrachtungsposition ändert, worin jedes der Beugungsgitterpixel ein einzelnes optisches Katastrophenbeugungsgitter ist und worin die Beugungsgitterpixel entsprechende Sätze von reflektierenden oder durchlässigen Linien umfassen, welche eine Krümmung aufweisen, welche zwischen Pixeln variiert und welche zu einem vorbestimmten Graufaktor eines zugeordneten Pixels des optisch unveränderbaren Gegenbildes des optisch veränderbaren Bildes in bezug steht.

**24.** Beugungsgitter nach Anspruch 23, weiters gekennzeichnet dadurch, daß jedes Gitterpixel auch eine Funktion des Farbtons oder Farbwertes ist.

**25.** Beugungsgitter nach Anspruch 23 oder 24, weiters gekennzeichnet dadurch, daß jedes Gitterpixel derart ausgebildet ist, daß das in Pixel zerlegte Beugungsgitter auch ein strukturell stabiles Bild dahingehend ist, das seine breite Form bei jeder gegebenen Position der Betrachtung nicht materiell durch geringe Verzerrungen bzw. Verformungen der Gitteroberfläche geändert ist.

**26.** Beugungsgitter nach einem der Ansprüche 23 bis 25, weiters gekennzeichnet dadurch, daß die Linien eine Liniendichte aufweisen, welche zwischen Pixeln variiert und welche zu einem vorbestimmten Farbton oder Farbwert des zugehörigen Pixels des optisch unveränderbaren Bildes in bezug steht.

**27.** Beugungsgitter nach einem der Ansprüche 23 bis 26, worin die Krümmung des Satzes von reflektierenden oder durchlässigen Linien eines Beugungsgitterpixels umgekehrt proportional zu dem Graufaktor ist.

**28.** Beugungsgitter nach einem der Ansprüche 23 bis 27, weiters gekennzeichnet dadurch, daß jedes einzelne optische Beugungsgitter reflektierende oder durchlässige Linien umfaßt, welche in Termen von Koordinaten x, y in der Ebene des Gitters durch die Gleichung S(x,y) = kN definiert sind, worin k ein Skalierungsfaktor ist, N eine ganze Zahl ist und die Funktion S(x,y) gegeben ist durch:

$$S_{ij}(x,y) = W_{ij}(x,y) + \beta_{ij}C_{ij}(x,y)$$

worin

$S_{ij}(x,y)$ die Anfangsphasenfunktion ist, welche durch das Beugungspixel ij erzeugt wird, wenn es normal durch eine kollimierte, monochromatische Lichtwelle beleuchtet wird,
$W_{ij}(x,y)$ eine Trägerwelle einer Ordnung ungleich null ist,
$C_{ij}(x,y)$ eine Funktion von x, y ist, welche sich rasch in bezug auf x und y ändert und deren Hess'sche Funktion nicht ident null ist, d.h. nicht ident verschwindet;
$\beta_{ij}$ ein Faktor proportional zu dem festgestellten Farbton oder Farbwert ist; und
i, j die Koordinaten der entsprechenden Pixel sind.

**29.** Beugungsgitter nach Anspruch 28, weiters gekennzeichnet dadurch, daß die Funktion $C_{ij}(x,y)$ gewählt ist aus dem Satz von Funkticnen, umfassend Produkte oder Summen von Sinustermen oder einer Kombination davon.

**30.** Beugungsgitter nach einem der Ansprüche 23 bis 29, weiters gekennzeichnet dadurch, daß die Gitterfunktion für einige oder alle der Pixel derart angeordnet ist, daß eine Reproduktion des in Pixel zerlegten Beugungsgitters durch Reflexionskontaktdrucken ein Muster nullter Ordnung erzeugt, welches beträchtlich durch Moiré- oder Talbot-Randeffekte beeinträchtigt ist.

**31.** Beugungsgitter nach Anspruch 30, weiters gekennzeichnet dadurch, daß die Gitterfunktion Sinusterme unterschiedlicher Periodizität beinhaltet, sodaß das Muster nullter Ordnung der Reproduktion ein Hybrid zwischen einem Negativ und einem Positiv des Musters nullter Ordnung des ursprünglichen Gitters ist, aus welchem die Reproduktion hergestellt wurde.

**32.** Beugungsgitter nach Anspruch 30 oder 31, wenn abhängig von Anspruch 29, weiters gekennzeichnet dadurch, daß die Sinuskomponenten von $C_{ij}(x,y)$ Terme unterschiedlicher Periodizität beinhalten, um dadurch stark gekrümmte Wellenfronten zu erzeugen.

**33.** Beugungsgitter nach Anspruch 31 oder 32, wenn abhängig von Anspruch 28, weiters gekennzeichnet dadurch, daß die rechte Seite der Gleichung (1) einen weiteren summierten Schildfunktionsterm einer Periodizität aufweist, welche bedeutend größer als die Pixelabmessungen ist.

**34.** Beugungsgitter nach einem der Ansprüche 23 bis 33, weiters gekennzeichnet dadurch, daß die Gitterpixel Quadrate mit weniger als 1mm$^2$ Fläche sind.

**35.** Beugungsgitter nach einem der Ansprüche 23 bis 34, weiters gekennzeichnet dadurch, daß das in Pixel zerlegte Gitter reflektierende oder durchlässige Linien einer Tiefe aufweist, welche derart variiert, um zu bewirken, daß ein statischer, sichtbarer Text oder grafisches Bild in der nullten Beugungsordnung auftreten.

**36.** Beugungsgitter nach einem der Ansprüche 23 bis 35, umfassend ein haltbares Mastergitter, welches durch Elektronenstrahllithografie hergestellt ist, aus welchem viele Replikagitter erzeugt werden können.

**37.** Beugungsgitter nach Anspruch 33, weiters gekennzeichnet dadurch, daß der Schildfunktionsterm aus einer Summe und/ oder einem Produkt von Sinus funktionen zusammengesetzt ist, um zu bewirken, daß das Beugungsgitter stark gekrümmte Wellenfronten beugt, welche die Talbot-Randeffekte verstärken, welche beim Reflexionskontaktdrucken des Gitters erzeugt werden.

**38.** Beugungsgitter nach einem der Ansprüche 23 bis 37, weiters gekennzeichnet dadurch, daß ein optisch veränderbares Bild, welches bei Beleuchtung des Gitters betrachtbar ist, von einem Bild positiver Tönung zu dem entsprechenden umgekehrten Bild negativer Tönung variiert, wenn sich der Betrachtungswinkel ändert.

**39.** Beugungsgitter nach einem der Ansprüche 23 bis 38, weiters gekennzeichnet dadurch, daß die reflektierenden oder durchlässigen Linien als Nuten bzw. Rillen geformt sind, und daß die Nutentiefe der Gitterpixel derart variiert, um zu bewirken, daß ein sichtbarer Text oder ein grafisches Bild in der nullten Beugungsordnung auftreten.

**40.** Beugungsgitter nach einem der Ansprüche 23 bis 39, welches auf einem Geldschein, einer Kreditkarte, einem Wertpapier oder einem anderen Sicherheitsdokument vorgesehen ist, um das Dokument gegenüber einer Fälschung bzw. Nachahmung zu schützen.

**41.** Beugungsgitter nach einem der Ansprüche 23 bis 40, weiters gekennzeichnet dadurch, daß die Graufaktoren der Pixel des optisch unveränderbaren Bildes aus einer Skala, enthaltend eine vorgegebene, endliche Anzahl von Werten des Graufaktors, gewählt sind.

**42.** Beugungsgitter nach einem der Ansprüche 23 bis 41, weiters gekennzeichnet dadurch, daß die reflektierenden oder durchlässigen Linien polygonförmige Nutenelemente mit unterschiedlicher Tiefe, Breite oder Abstand sind.

**Revendications**

**1.** Procédé de formation d'un réseau de diffraction qui produit une image optiquement variable, ladite image étant optiquement variable en ce sens qu'elle varie selon la position d'observation, procédé comprenant les étapes consistant à :

diviser une image optiquement invariable en de multiples pixels;
déterminer un pixel à réseau de diffraction correspondant pour chacun desdits pixels de l'image optiquement invariable, lequel pixel à réseau de diffraction est un réseau de diffraction individuel à catastrophe optique correspondant à un pixel correspondant de l'image optiquement invariable; et
produire un réseau de diffraction pixélisé qui comprend un ensemble desdits pixels à réseau de diffraction et qui, lorsqu'il est éclairé, génère une reproduction optiquement variable de ladite image optiquement invariable, dans lequel un facteur de gris est déterminé pour chacun desdits pixels de l'image optiquement invariable et lesdits pixels à réseau de diffraction comprennent des groupes respectifs de lignes réfléchissantes ou transparentes ayant une courbure qui varie d'un pixel à l'autre et qui est liée au facteur de gris déterminé du pixel correspondant de l'image optiquement invariable.

**2.** Procédé selon la revendication 1, caractérisé en outre en ce que chaque pixel à réseau est tel que le réseau de diffraction pixélisé est aussi une reproduction structurellement stable de ladite image optiquement invariable en ce sens que sa forme large à n'importe quelle position d'observation donnée n'est pas matériellement modifiée par de légères distorsions de la surface du réseau.

**3.** Procédé selon la revendication 1 ou 2, dans lequel la courbure dudit groupe de lignes réfléchissantes ou transparentes d'un pixel à réseau de diffraction est inversement proportionnelle au facteur de gris.

4. Procédé selon l'une quelconque des revendications précédentes, caractérisé en outre en ce que chaque réseau individuel de diffraction optique comprend des lignes réfléchissantes ou transparentes définies, en termes de coordonnées x,y dans le plan du réseau, par l'équation $S(x,y) = kN$ où k est un facteur d'échelle, N est un entier et la fonction $S(x,y)$ est donnée par :

$$S_{ij}(x,y) = W_{ij}(x,y) + \beta_{ij}C_{ij}(x,y) \qquad (1)$$

où

$S_{ij}(x,y)$ est la fonction de phase initiale générée par le pixel à réseau ij quand il est éclairé normalement par une onde lumineuse monochromatique collimatée,

$W_{ij}(x,y)$ est une onde porteuse d'ordre non zéro,

$C_{ij}(x,y)$ est une fonction de x,y qui varie rapidement par rapport à x et y et dont le Hessien n'est pas identiquement zéro, c'est-à-dire ne s'évanouit pas identiquement;

$\beta_{ij}$ est un facteur proportionnel à la valeur évaluée de chrominance ou de couleur; et

i,j sont les coordonnées des pixels respectifs.

5. Procédé selon la revendication 4, caractérisé en outre en ce que la fonction $C_{ij}(x,y)$ est choisie parmi le groupe de fonctions comprenant des produits ou des sommes de termes sinusoïdaux, ou une combinaison de ceux-ci.

6. Procédé selon l'une quelconque des revendications précédentes, caractérisé en outre en ce que la fonction de réseau de certains ou de l'ensemble des pixels est sélectionnée de façon qu'une reproduction dudit réseau de diffraction pixélisé par tirage contact réfléchissant génère un motif d'ordre zéro qui est grossièrement dégradé par des effets de moiré ou de franges de Talbot.

7. Procédé selon la revendication 6, caractérisé en outre en ce que ladite fonction de réseau comprend des termes sinusoïdaux de périodicité différente de façon que le motif d'ordre zéro de la reproduction est un croisement entre un négatif et un positif du motif d'ordre zéro du réseau original à partir duquel la reproduction est réalisée.

8. Procédé selon la revendication 6 ou 7 lorsqu'elle dépend de la revendication 5, caractérisé en outre en ce que les composantes sinusoïdales de $C_{ij}(x,y)$ comprennent des termes de périodicité différente de façon à générer des fronts d'onde très incurvés.

9. Procédé selon la revendication 6 ou 7 lorsqu'elle dépend de la revendication 5, caractérisé en outre en ce que le membre droit de l'équation (1) comprend un autre terme additionné de fonction d'écran d'une périodicité sensiblement supérieure aux dimensions des pixels.

10. Procédé selon la revendication 9, caractérisé en outre en ce que ledit autre terme additionné est une somme et/ou un produit de termes sinusoïdaux de périodicité supérieure à $C_{ij}(x,y)$.

11. Procédé selon l'une quelconque des revendications précédentes, caractérisé en outre en ce que les pixels à réseau sont des carrés de moins de 1 mm$^2$ de surface.

12. Procédé selon l'une quelconque des revendications précédentes, caractérisé en outre en ce que le réseau de diffraction pixélisé est produit en formant des sillons réfléchissants, par exemple des sillons carrés, dans une surface métallisée.

13. Procédé selon l'une quelconque des revendications précédentes, caractérisé en outre en ce que ledit réseau de diffraction pixélisé est un réseau original durable formé par lithographie par faisceau électronique, à partir duquel de multiples répliques de réseau peuvent être produites.

14. Procédé selon la revendication 9, caractérisé en outre en ce que ledit terme de fonction d'écran est composé d'une somme et/ou d'un produit de fonctions sinusoïdales afin d'amener le réseau de diffraction à diffracter des fronts d'onde très incurvés qui amplifient lesdits effets de franges de Talbot générés lors d'un tirage contact réfléchissant du réseau.

**15.** Procédé selon l'une quelconque des revendications précédentes, caractérisé en outre en ce qu'une image optiquement variable observable lorsque le réseau est éclairé varie d'une image positive à l'image négative inverse correspondante lorsque l'angle d'observation change.

**16.** Procédé selon l'une quelconque des revendications précédentes, caractérisé en outre en ce que lesdites lignes réfléchissantes ou transparentes sont formées comme des sillons et caractérisé en outre par une variation sélective de la profondeur des sillons des pixels à réseau de façon à faire apparaître une image visible d'un texte ou d'un graphique dans l'ordre zéro de diffraction.

**17.** Procédé selon la revendication 16 lorsqu'elle dépend de la revendication 13, caractérisé en outre en ce qu'on fait varier ladite profondeur des sillons en faisant varier le courant du faisceau électronique dans ladite lithographie par faisceau électronique.

**18.** Procédé selon l'une quelconque des revendications précédentes, caractérisé en outre en ce que lesdits facteurs de gris des pixels de l'image optiquement invariable sont sélectionnés parmi une échelle contenant un nombre fini et prédéterminé de valeurs de facteur de gris.

**19.** Procédé selon l'une quelconque des revendications précédentes, caractérisé en outre par la production dudit réseau de diffraction pixélisé en réplique de réseau par pressage à chaud avec un moule comprenant un réseau original.

**20.** Procédé selon la revendication 13 ou 19, caractérisé en outre en ce que le réseau original est un original en nickel plaqué d'or.

**21.** Procédé selon l'une quelconque des revendications précédentes, caractérisé en outre par la formation desdites lignes réfléchissantes ou transparentes sous forme de segments de sillons polygonaux de profondeur, de largeur et d'espacement variables.

**22.** Procédé selon la revendication 21, caractérisé en outre par l'ajustement desdites fonctions pour sélectionner la brillance, la stabilité et la couleur des pixels.

**23.** Dispositif à réseau de diffraction produisant une image optiquement variable correspondant à une image équivalente optiquement invariable, comprenant un réseau de diffraction pixélisé qui est un ensemble de pixels à réseau de diffraction et qui, lorsqu'il est éclairé, génère une image optiquement variable, ladite image étant optiquement variable en ce sens qu'elle varie selon la position d'observation, dans lequel chacun desdits pixels à réseau de diffraction est un réseau de diffraction individuel à catastrophe optique et dans lequel lesdits pixels à réseau de diffraction comprennent des groupes respectifs de lignes réfléchissantes ou transparentes ayant une courbure qui varie d'un pixel à l'autre et qui est liée à un facteur de gris prédéterminé d'un pixel correspondant de l'image équivalente optiquement invariable de ladite image optiquement variable.

**24.** Réseau de diffraction selon la revendication 23, caractérisé en outre en ce que chaque pixel à réseau varie aussi en fonction d'une valeur de chrominance ou de couleur.

**25.** Réseau de diffraction selon la revendication 23 ou 24, caractérisé en outre en ce que chaque pixel à réseau est tel que le réseau de diffraction pixélisé est aussi une image structurellement stable en ce sens que sa forme large à n'importe quelle position d'observation donnée n'est pas matériellement modifiée par de légères distorsions de la surface du réseau.

**26.** Réseau de diffraction selon l'une quelconque des revendications 23 à 25, caractérisé en outre en ce que lesdites lignes ont une densité de lignes qui varie d'un pixel à l'autre et qui est liée à une valeur prédéterminée de chrominance ou de couleur du pixel correspondant de l'image optiquement invariable.

**27.** Réseau de diffraction selon l'une quelconque des revendications 23 à 26, dans lequel la courbure dudit groupe de lignes réfléchissantes ou transparentes d'un pixel à réseau de diffraction est inversement proportionnelle au facteur de gris.

28. Réseau de diffraction selon l'une quelconque des revendications 23 à 27, caractérisé en outre en ce que chaque réseau individuel de diffraction optique comprend des lignes réfléchissantes ou transparentes définies, en termes de coordonnées x,y dans le plan du réseau, par l'équation S(x,y) = kN où k est un facteur d'échelle, N est un entier et la fonction S(x,y) est donnée par :

$$S_{ij}(x,y) = W_{ij}(x,y) + \beta_{ij}C_{ij}(x,y) \tag{1}$$

où

$S_{ij}(x,y)$ est la fonction de phase initiale générée par le pixel à réseau ij quand il est éclairé normalement par une onde lumineuse monochromatique collimatée,

$W_{ij}(x,y)$ est une onde porteuse d'ordre non zéro,

$C_{ij}(x,y)$ est une fonction de x,y qui varie rapidement par rapport à x et y et dont le Hessien n'est pas identiquement zéro, c'est-à-dire ne s'évanouit pas identiquement;

$\beta_{ij}$ est un facteur proportionnel à la valeur évaluée de chrominance ou de couleur; et

i,j sont les coordonnées des pixels respectifs.

29. Réseau de diffraction selon la revendication 28, caractérisé en outre en ce que la fonction $C_{ij}(x,y)$ est choisie parmi le groupe de fonctions comprenant des produits ou des sommes de termes sinusoïdaux, ou une combinaison de ceux-ci.

30. Réseau de diffraction selon l'une quelconque des revendications 23 à 29, caractérisé en outre en ce que la fonction de réseau de certains ou de l'ensemble des pixels est sélectionnée de façon qu'une reproduction dudit réseau de diffraction pixélisé par tirage contact réfléchissant génère un motif d'ordre zéro qui est grossièrement dégradé par des effets de moiré ou de franges de Talbot.

31. Réseau de diffraction selon la revendication 30, caractérisé en outre en ce que ladite fonction de réseau comprend des termes sinusoïdaux de périodicité différente de façon que le motif d'ordre zéro de la reproduction est un croisement entre un négatif et un positif du motif d'ordre zéro du réseau original à partir duquel la reproduction a été réalisée.

32. Réseau de diffraction selon la revendication 30 ou 31 lorsqu'elle dépend de la revendication 29, caractérisé en outre en ce que les composantes sinusoïdales de $C_{ij}(x,y)$ comprennent des termes de périodicité différente de façon à générer des fronts d'onde très incurvés.

33. Réseau de diffraction selon la revendication 31 ou 32 lorsqu'elle dépend de la revendication 28, caractérisé en outre en ce que le membre droit de l'équation (1) comprend un autre terme additionné de fonction d'écran d'une périodicité sensiblement supérieure aux dimensions des pixels.

34. Réseau de diffraction selon l'une quelconque des revendications 23 à 33, caractérisé en outre en ce que les pixels à réseau sont des carrés de moins de 1 mm$^2$ de surface.

35. Réseau de diffraction selon l'une quelconque des revendications 23 à 34, caractérisé en outre en ce que ledit réseau pixélisé comprend des lignes réfléchissantes ou transparentes d'une profondeur qui varie de façon à faire apparaître une image visible statique d'un texte ou d'un graphique dans l'ordre zéro de diffraction.

36. Réseau de diffraction selon l'une quelconque des revendications 23 à 35, comprenant un réseau original durable formé par lithographie par faisceau électronique, à partir duquel de multiples répliques de réseau peuvent être produites.

37. Réseau de diffraction selon la revendication 33, caractérisé en outre en ce que ledit terme de fonction d'écran est composé d'une somme et/ou d'un produit de fonctions sinusoïdales afin d'amener le réseau de diffraction à diffracter des fronts d'onde très incurvés qui amplifient lesdits effets de franges de Talbot générés lors d'un tirage contact réfléchissant du réseau.

38. Réseau de diffraction selon l'une quelconque des revendications 23 à 37, caractérisé en outre en ce qu'une image optiquement variable observable lorsque le réseau est éclairé varie d'une image positive à l'image négative inverse correspondante lorsque l'angle d'observation change.

39. Réseau de diffraction selon l'une quelconque des revendications 23 à 38, caractérisé en outre en ce que lesdites lignes réfléchissantes ou transparentes sont formées comme des sillons et en ce que la profondeur des sillons des pixels à réseau varie de façon à faire apparaître une image visible d'un texte ou d'un graphique dans l'ordre zéro de diffraction.

40. Réseau de diffraction selon l'une quelconque des revendications 23 à 39, agencé sur un billet de banque, une carte de crédit, un certificat d'action ou tout autre document de sécurité pour protéger le document contre la contrefaçon.

41. Réseau de diffraction selon l'une quelconque des revendications 23 à 40, caractérisé en outre en ce que lesdits facteurs de gris des pixels de l'image optiquement invariable sont sélectionnés parmi une échelle contenant un nombre fini et prédéterminé de valeurs de facteur de gris.

42. Réseau de diffraction selon l'une quelconque des revendications 23 à 41, caractérisé en outre en ce que lesdites lignes réfléchissantes ou transparentes sont des segments de sillons polygonaux de profondeur, de largeur et d'espacement variables.

FIGURE 1

# FIGURE 2

**FIGURE 3**

FIGURE 4

FIGURE 5A

FIGURE 5B

FIGURE 6